# EUROPÄISCHE PATENTANMELDUNG

(11) **EP 4 340 193 A1**
(43) Veröffentlichungstag der Anmeldung: **20.03.2024**
(21) Anmeldenummer: 22196423.2
(22) Anmeldetag: 19.09.2022
(51) Int. Cl.: H02K 15/12, B05B 13/02, H02K 15/10, B05C 9/14, B05D 1/00, B05D 3/14

(54) **IMPRÄGNIERVORRICHTUNG ZUM TRÄUFELIMPRÄGNIEREN MINDESTENS EINES FÜR ELEKTRISCHE MASCHINEN BESTIMMTEN SPULENKÖRPERS SOWIE VERFAHREN ZUM BETREIBEN EINER DERARTIGEN IMPRÄGNIERVORRICHTUNG**

(71) Anmelder: VAF Gesellschaft für Verkettungsanlagen, Automationseinrichtungen und Fördertechnik mbH, 73441 Bopfingen Baden-Württemberg (DE)
(72) Erfinder: Haußner, Philipp, 86741 Ehningen am Ries (DE); Schachner, Florian, 86736 Auhausen (DE)
(74) Vertreter: Schorr, Peter Karl

(57) **Zusammenfassung**

Die Erfindung betrifft eine Imprägniervorrichtung (2) zum Träufelimprägnieren mindestens eines für elektrische Maschinen bestimmten Spulenkörpers (4), wie Wickelgut, insbesondere Spule für einen Stator oder Rotor, mit mindestens einer Halteeinrichtung (6), die mindestens ein Haltemittel (8) aufweist, das um eine zentrisch durch das Haltemittel (8) verlaufende Rotationsachse (10) drehend antreibbar oder angetrieben ist und an dem mindestens ein Spulenkörper (4) relativ zum Haltemittel (8) drehfest festlegbar oder festgelegt ist, mit mindestens einem ersten Arbeitsbereich (12), in dem mindestens eine Träufeleinrichtung (14) angeordnet ist, durch die ein aushärtendes Beschichtungsmittel, wie Harz, insbesondere Kunstharz, oder Lack an den Spulenkörper (4) abgebbar ist, mit mindestens einem zweiten Arbeitsbereich (16), in dem zumindest das auf den Spulenkörper (4) abgegebene Beschichtungsmittel gelierbar ist, und mit mindestens einer Überführungseinrichtung (18), durch die das mindestens eine Haltemittel (8) der Halteeinrichtung (6) vom ersten Arbeitsbereich (12) in den zweiten Arbeitsbereich (16) und zurück überführbar ist.

## Beschreibung

Die Erfindung betrifft eine Imprägniervorrichtung zum Träufelimprägnieren mindestens eines für elektrische Maschinen bestimmten Spulenkörpers sowie ein Verfahren zum Betreiben einer derartigen Imprägniervorrichtung.

Imprägniervorrichtungen zum Träufelimprägnieren mindestens eines für elektrische Maschinen bestimmten Spulenkörpers sind in unterschiedlichen Ausführungsformen aus dem Stand der Technik bekannt. Vor einem Träufelimprägnieren der Spulenkörper müssen diese auf eine bestimmte Vorerwärm-Temperatur erwärmt werden, um dem zum Beschichten verwendeten Fluid die Möglichkeit zu geben, die unterschiedlichen Komponenten des Spulenkörpers zu erreichen und zu bedecken, ohne vorzeitig zu gelieren, bzw. auszuhärten.

Nach dem Träufelimprägnieren werden die mit Beschichtungsmittel beträufelten Spulenkörper in einer nachgelagerten Bearbeitungsstation unter Aufrechterhaltung einer Gelier-Temperatur geliert. Sowohl beim Beträufeln als auch beim Gelieren werden die Spulenkörper um eine Rotationsachse gedreht, um eine gleichmäßige Verteilung von Beschichtungsmittel zu gewährleisten.

Bei den bekannten Imprägniervorrichtungen werden die Spulenkörper vor dem Beträufeln mit Beschichtungsmittel in einer separaten Erwärmungseinrichtung auf eine Vorerwärm-Temperatur erwärmt. Diese vorgelagerte Arbeitsstation kann beispielsweise einen Ofen umfassen. Aus diesem werden die Spulenkörper entnommen und an die Träufeleinrichtung-Station verfahren, dort eingespannt und mit Beschichtungsmittel beträufelt. Nach dem Beträufeln werden die beschichteten Spulenkörper aus der Träufeleinrichtung-Station entnommen und zum Gelieren an eine Gelier-Station verfahren, dort eingespannt und geliert.

Hierbei hat es sich als nachteilig herausgestellt, dass das Erwärmen, Beschichten und Gelieren zeitaufwändig ist, insbesondere durch die Übergabe des Spulenkörpers von einer Bearbeitungsstation an die nächste und das jeweilige ein- und ausspannen. Darüber hinaus kann die Qualität eines derart hergestellten Spulenkörpers aufgrund des mehrfachen Umspannens und Einspannens bzw. Vertaktens reduziert sein.

Eine Aufgabe eines Ausführungsbeispiels der Erfindung ist, eine Imprägniervorrichtung zum Träufelimprägnieren mindestens eines für elektrische Maschinen bestimmten Spulenkörpers sowie ein Verfahren zum Betreiben einer derartigen Imprägniervorrichtung vorzuschlagen, bei der der Herstellungsprozess vom beschichteten Spulenkörper verkürzt ist.

Diese Aufgabe wird gelöst durch eine Imprägniervorrichtung zum Träufelimprägnieren mindestens eines für elektrische Maschinen bestimmten Spulenkörpers, wie Wickelgut, insbesondere Spule für einen Stator oder Rotor, mit mindestens einer Halteeinrichtung, die mindestens ein Haltemittel aufweist, das um eine zentrisch durch das Haltemittel verlaufende Rotationsachse drehend antreibbar oder angetrieben ist und an dem mindestens ein Spulenkörper relativ zum Haltemittel drehfest festlegbar oder festgelegt ist, mit mindestens einem ersten Arbeitsbereich, in dem mindestens eine Träufeleinrichtung angeordnet ist, durch die ein aushärtendes Beschichtungsmittel, wie Harz, insbesondere Kunstharz, oder Lack an den Spulenkörper abgebbar ist, mit mindestens einem zweiten Arbeitsbereich, in dem zumindest das auf den Spulenkörper abgegebene Beschichtungsmittel gelierbar ist, und mit mindestens einer Überführungseinrichtung, durch die das mindestens eine Haltemittel der Halteeinrichtung vom ersten Arbeitsbereich in den zweiten Arbeitsbereich und zurück überführbar ist.

Dadurch, dass ein an der Halteeinrichtung, insbesondere am Haltemittel der Halteeinrichtung, angeordneter Spulenkörper von einem ersten Arbeitsbereich, in dem der Spulenkörper mit Beschichtungsmittel beschichtet wird, in einen zweiten Arbeitsbereich überführt wird, in denen das Beschichtungsmittel gelierbar ist, entfällt ein Umspannen des Spulenkörpers. Hierdurch ist das Überführen des Spulenkörpers vom zweiten Arbeitsbereich in den ersten Arbeitsbereich zeitoptimiert realisierbar.

Bei dem Spulenkörper kann es sich um ein Wickelgut, insbesondere eine Spule für einen Stator oder einen Rotor, handeln. Der Spulenkörper kann rotationssymmetrisch oder nicht rotationssymmetrisch ausgebildet sein.

Das Überführen vom ersten Arbeitsbereich in den zweiten Arbeitsbereich und zurück, kann grundsätzlich beliebig ausgebildet sein. Die Imprägniervorrichtung lässt sich drehtischartig ausbilden, wenn die Überführungseinrichtung mindestens eine eine Drehachse umfassende Lagereinheit umfasst, wobei das Überführen des mindestens einen Haltemittels vom ersten Arbeitsbereich in den zweiten Arbeitsbereich eine Dreh- oder Pendelbewegung um die Drehachse der Lagereinheit umfasst.

Hierdurch ist die Imprägniervorrichtung bauraumoptimiert ausbildbar. Darüber hinaus können die Komponenten, die im ersten Arbeitsbereich und im zweiten Arbeitsbereich für die Bearbeitung der Spulenkörper vorhanden sind, jeweils an ihrem Ort verbleiben und es findet lediglich ein Wechsel der zu bearbeitenden Spulenkörper statt, nämlich durch Drehung um die Drehachse. Hierdurch ist ein Überführen der Spulenkörper von einem Arbeitsbereich in den nächsten Arbeitsbereich zeitlich optimiert.

Ferner lässt sich das um die Rotationsachse drehend antreibbare oder angetriebene Haltemittel arbeitsschrittoptimiert betreiben, wenn das Haltemittel mindestens einen Drehantrieb umfasst, durch den das das Haltemittel um die zentrisch durch das Haltemittel verlaufende Rotationsachse drehend antreibbar oder angetrieben ist und durch den eine arbeitsschritt- und arbeitsbereich-abhängige Rotationsgeschwindigkeit vorgebbar ist.

Dadurch, dass das Haltemittel einen Drehantrieb umfasst, kann das Haltemittel von der Überführungseinrichtung entkoppelt und bedarfsgerecht betrieben werden. Durch das Entkoppeln kann ein ruckelfreies und pausenfreies Rotieren gewährleistet werden. Dadurch, dass die Rotationsgeschwindigkeit arbeitsschritt- und arbeitsbereich-abhängige vorggebbar ist, kann das Beträufeln, Gelieren und Aushärten verbessert erfolgen. Ferne kann bei einem Beladen und Entladen des Haltemittels mit Spulenkörpern eine Rotation ausgesetzt werden.

Bei einer Weiterbildung letztgenannter Ausführungsform erweist es sich als vorteilhaft, wenn die Dreh- oder Pendelbewegung um die Drehachse der Lagereinheit um das Haltemittel von dem ersten Arbeitsbereich in den zweiten Arbeitsbereich zu überführen mindestens 60°, insbesondere mindestens 90°, insbesondere mindestens 180°, umfasst und/oder wenn die Drehachse parallel oder schräg zu einer Vertikalen oder einer Horizontalen verläuft.

Dadurch, dass die Dreh- oder Pendelbewegung, um vom ersten Arbeitsbereich in den zweiten Arbeitsbereich zu gelangen, 180° umfasst, sind die beiden Arbeitsbereiche einander gegenüberliegend ausgebildet.

Hierdurch kann der Platzbedarf für den ersten Arbeitsbereich, dem Platzbedarf vom zweiten Arbeitsbereich entsprechen.

Um den ersten Arbeitsbereich und den zweiten Arbeitsbereich räumlich voneinander zu trennen, erweist es sich als vorteilhaft, wenn die Halteeinrichtung eine flächenhafte Tragstruktur umfasst, die den ersten Arbeitsbereich und den zweiten Arbeitsbereich trennwandartig voneinander trennt und/oder wenn die flächenhafte Tragstruktur der Halteeinrichtung an der die Drehachse umfassenden Lagereinheit drehbar festgelegt ist.

In der Tragstruktur können zudem das mindestens eine Haltemittel angeordnet sein sowie ein Rotationsantrieb, um das Haltemittel um die Rotationsachse drehend zu bewegen.

Bei einer Weiterbildung letztgenannter Ausführungsform erweist es sich als vorteilhaft, wenn mindestens eines des mindestens einen Haltemittels an der flächenhaften Tragstruktur um die Rotationsachse drehbar festgelegt ist und wenn das Überführen mindestens eines des mindestens einen Haltemittels vom ersten Arbeitsbereich in den zweiten Arbeitsbereich eine Dreh- oder Pendelbewegung der Tragstruktur um die Drehachse der Lagereinheit umfasst.

Hierdurch ist die flächenhafte Tragstruktur drehtürartig ausgebildet. Solchenfalls können die beiden flächenhaften Oberflächen der Tragstruktur, die dem ersten Arbeitsbereich, bzw. dem zweiten Arbeitsbereich zugewandt sind, identisch ausgebildet sein.

Solchenfalls erweist es sich als vorteilhaft, wenn die Halteeinrichtung mindestens zwei Haltemittel umfasst, die auf einander gegenüberliegenden Seiten der Tragstruktur angeordnet sind, insbesondere derart, dass mindestens ein Haltemittel im ersten Arbeitsbereich und mindestens ein Haltemittel im zweiten Arbeitsbereich angeordnet ist, insbesondere, dass die mindestens zwei Haltemittel der Halteeinrichtung bezüglich der Drehachse punktsymmetrisch zueinander an der Tragstruktur angeordnet sind

Solchenfalls sind an der Tragstruktur auf jeder Seite mindestens ein Haltemittel anordenbar. Durch ein punktsymmetrisches Anordnen der Haltemittel kann gewährleistet werden, dass bei einer Drehung der Tragstruktur um das Lagermittel um mindestens 60°, insbesondere mindestens 90°, insbesondere mindestens 180°, das vormals im ersten Arbeitsbereich befindliche Haltemittel nun derart im zweiten Arbeitsbereich angeordnet ist, wie das vormals im zweiten Arbeitsbereich angeordnete Haltemittel, das nun an derselben Stelle im ersten Arbeitsbereich angeordnet ist, wie das vorige Haltemittel. Hierdurch müssen die Bearbeitungs-Komponenten im ersten Arbeitsbereich und zweiten Arbeitsbereich nicht stets neu justiert werden, da die Bearbeitungsposition stets gleich bleibt.

Die Träufeleinrichtung kann grundsätzlich beliebig ausgebildet sein, sofern sie der Funktion nachkommt, dem Spulenkörper Beschichtungsmittel zuzuführen, insbesondere Beschichtungsmittel an den Spulenkörper abzugeben. Die Träufeleinrichtung lässt sich einfach und kostengünstig ausgestalten, wenn die Träufeleinrichtung mindestens eine Düse umfasst, über die Beschichtungsmittel an den Spulenkörper abgebbar, insbesondere träufelbar, ist, und/oder wenn die Träufeleinrichtung mindestens eine der mindestens einen Düse zugeordnete Verfahreinheit umfasst, durch die mindestens eine der mindestens einen Düse parallel oder schräg zu einer Horizontalen durch Translation verfahrbar ist.

Dadurch, dass die Träufeleinrichtung eine Düse umfasst, kann Beschichtungsmittel gezielt an eine bestimmte Stelle des Spulenkörpers abgegeben werden. Dadurch, dass die Träufeleinrichtung mindestens eine der Düse zugeordnete Verfahreinheit umfasst, kann die Düse relativ zum Spulenkörper bewegt werden. Hierdurch kann der Spulenkörper am Haltemittel am selben Ort verbleiben und lediglich gemeinsam mit dem Haltemittel um die Rotationsachse gedreht werden. Durch das Verdrehen des Haltemittels um die Rotationsachse und des daran angeordneten Spulenkörpers, kann die Düse der Träufeleinrichtung zumindest zeitweise an ein und derselben Stelle verharren und eine vollständige Umdrehung des Spulenkörpers abwarten, bevor die Düse mit der Verfahreinheit parallel oder schräg zur Horizontalen verfahren wird.

Das Abgeben von Beschichtungsmittel an den Spulenkörper lässt sich verkürzen, wenn jedem im ersten Arbeitsbereich angeordneten Haltemittel mindestens eine Düse zugeordnet ist und/oder wenn jedem im ersten Arbeitsbereich angeordneten Haltemittel mindestens zwei Düsen zugeordnet sind, die an selben Spulenkörper gleichzeitig und an einander gegenüberliegenden Enden oder mit mindestens zwei Düsen an einem Ende Beschichtungsmittel abgeben, insbesondere an einem der Tragstruktur nächstgelegenen inneren Wickelkopf und einem dem inneren Wickelkopf gegenüberliegenden äußeren Wickelkopf.

Jeder der mindestens zwei Düsen kann eine eigene Verfahreinheit zugeordnet sein. Dadurch, dass mindestens zwei Düsen vorgesehen sind, ist die Zeit, die benötigt wird, um einen Spulenkörper vollständig mit Beschichtungsmittel zu beaufschlagen, verkürzbar.

An dem Haltemittel kann mindestens ein Spulenkörper angeordnet sein. Bei Ausführungsformen der Imprägniervorrichtung kann vorgesehen sein, dass an einem Haltemittel der Halteeinrichtung mindestens zwei Spulenkörper angeordnet sind, wobei jedem Spulenkörper mindestens eine Düse der Träufeleinrichtung zugeordnet ist oder wobei die mindestens eine Düse den mindesten zwei Spulenkörper zugeordnet ist.

Hierdurch sind an ein und demselben Haltemittel der Haltereinrichtung mehrere Spulenkörper anordenbar. Jedem dieser am Haltemittel angeordneten Spulenkörper kann mindestens eine, insbesondere mindestens zwei, Düsen zugeordnet sein oder dem Haltemittel in Gänze mindestens eine oder mindestens zwei Düsen, wobei die Düsen jeweils von einem Spulenkörper zum nächsten Spulenkörper verfahren werden.

Um zu gewährleisten, dass der Spulenkörper eine ausreichende Temperatur umfasst, die ein optimales Beaufschlagen des Spulenkörpers mit Beschichtungsmittel gewährleisten, insbesondere, um ein tiefes Eindringen von Beschichtungsmittel an eher schwer zugängliche Stellen des Spulenkörpers zu gewährleisten, umfasst ein Ausführungsbeispiel der Imprägniervorrichtung mindestens eine Wärmeeinheit, die mindestens ein Wärmeelement umfasst, durch das mittels Induktion, Wärmestrahlung, Wärmeleitung und/oder Konvektion, insbesondere durch Infrarot und Heißluft, der mindestens eine Spulenkörper im ersten Arbeitsbereich auf Träufel-Temperatur und/oder in dem zweiten Arbeitsbereich auf eine Vorerwärm-Temperatur, Gelier-Temperatur und/oder Aushärte-Temperatur erwärmbar ist und/oder durch mindestens eine Stromwärmeeinheit, die mindestens ein in oder am Haltemittel festgelegtes Kontaktmittel umfasst, das in der am Haltemittel festgelegten Anordnung des Spulenkörpers mit mindestens einem Phasenanschluss des Körpers manuell oder automatisch verbindbar oder verbunden ist, das beim Überführen des Haltemittels vom ersten Arbeitsbereich in den zweiten Arbeitsbereich durchgehend und unterbrechungsfrei mit einer Stromzufuhr der Stromwärmeeinheit verbindbar oder verbunden ist und durch das der Körper im ersten Arbeitsbereich auf Träufel-Temperatur und/oder in dem zweiten Arbeitsbereich auf eine Vorerwärm-Temperatur, Gelier-Temperatur und/oder Aushärte-Temperatur durchgehend und unterbrechungsfrei elektrisch erwärmbar ist.

Wenn die Imprägnier-Vorrichtung eine Stromwärmeeinheit umfasst, kann diese im Haltemittel integriert angeordnet sein und den Spulenkörper elektrisch heizen.

Wenn die Wärmeeinheit ein Wärmeelement umfasst, kann dieses beispielsweise im zweiten Arbeitsbereich ein verfahrbares Wärmeelement umfassen, das mit geringem Abstand zum Spulenkörper angeordnet werden kann und diesen erwärmt.

Darüber hinaus kann die Wärmeeinheit im ersten Arbeitsbereich ofenartig ausgebildet sein, um ein Beschichten des Spulenkörpers durch die Träufeleinrichtung kollisionsfrei auszugestalten.

Wenn die Wärmeeinheit im zweiten Arbeitsbereich zum Vorerwärmen, zum Gelieren und/oder Aushärten des Spulenkörpers vorgesehen sein soll, erweist es sich als vorteilhaft, wenn die Wärmeeinheit im zweiten Arbeitsbereich mindestens ein schirmartiges oder ringartiges Wärmelement umfasst, das am Spulenkörper anordenbar ist und durch das der Spulenkörper mittels Wärmezufuhr, insbesondere Induktion, auf die Vorerwärm-Temperatur, Gelier-Temperatur und/oder Aushärte-Temperatur erwärmbar ist.

Das Wärmeelement kann kreisartig oder halbkreisartig ausgebildet sein und den Spulenkörper beim Zuführen von Wärme umfangsseitig zumindest teilweise umgeben.

Ferner erweist es sich als vorteilhaft, wenn die Imprägniervorrichtung eine Hubeinheit umfasst, durch die die Träufeleinrichtung, insbesondere die mindestens eine Verfahreinheit, und/oder die Wärmeeinheit gemeinsam oder unabhängig voneinander parallel oder schräg zu einer Vertikalen durch Translation verfahrbar sind, wobei die Träufeleinrichtung von einer Träufelposition, in der die mindestens eine Düse der Träufeleinrichtung zum Spulenkörper den geringsten Abstand umfasst, in eine Warteposition überführbar ist in der der Abstand der Düse der Träufeleinrichtung zum Spulenkörper bezüglich der Träufelposition vergrößert ist und/oder wobei die Wärmeeinheit von einer Wärmeposition, in der das mindestens eine Wärmeelement zum Spulenkörper den geringsten Abstand umfasst, in eine Beladeposition überführbar ist in der der Abstand des Wärmeelements zum Spulenkörper bezüglich der Wärmeposition vergrößert ist.

Dadurch, dass durch die Hubeinheit die Träufeleinrichtung und/oder die Wärmeeinheit parallel und/oder schräg zu einer Vertikalen verfahrbar sind, können Wärmeeinheit und Träufeleinrichtung zum Spulenkörper beabstandet werden, beispielsweise, um die Tragstruktur um die Lagereinheit um mindestens 60°, insbesondere mindestens 90°, insbesondere mindestens 180°, zu drehen und um anschließend die Träufeleinrichtung und/oder die Wärmeeinheit wieder in eine Position zu verfahren, mit der die jeweilige Träufeleinrichtung oder Wärmeeinheit funktionsgerecht einsetzbar ist.

Bei einem Ausführungsbeispiel ist vorgesehen, dass die Imprägniervorrichtung mindestens ein Schutzgehäuse umfasst, in dem der erste Arbeitsbereich und der zweite Arbeitsbereich angeordnet sind und/oder gekennzeichnet durch zumindest ein erstes Zugangsmittel, wie Tür oder Klappe, im Schutzgehäuse durch das der erste Arbeitsbereich von außen zugänglich ist, und/oder durch zumindest ein zweites Zugangsmittel, wie Tür oder Klappe, im Schutzgehäuse durch das der zweite Arbeitsbereich von außen zugänglich ist.

Hierdurch können erster Arbeitsbereich und zweiter Arbeitsbereich eine gemeinsame Arbeitsstation bilden, die räumlich von der Umgebung getrennt ist.

Dadurch, dass der erste Arbeitsbereich durch ein erstes Zugangsmittel und/oder dadurch, dass der zweite Arbeitsbereich durch ein zweites Zugangsmittel von außen zugänglich ist, können die Spulenkörper auf einfache Weise von außen zugänglich sein, um diese zu be- und entladen.

Bei einer Ausführungsform der Imprägniervorrichtung umfasst der zweite Arbeitsbereich das zweite Zugangsmittel. Die Spulenkörper werden hierdurch im zweiten Arbeitsbereich am Haltemittel angeordnet und durch die Wärmeeinheit auf die Vorerwärm-Temperatur erwärmt. Hiernach wird durch Überführen der Tragstruktur durch Drehung um die Lagereinheit der vorerwärmte Spulenkörper im ersten Arbeitsbereich durch Beschichtungsmittel beschichtet. Zuvor am ersten Arbeitsbereich mit Beschichtungsmittel beschichtete Spulenkörper sind dann im zweiten Arbeitsbereich angeordnet und können durch die Wärmeeinheit durch das Wärmeelement auf Gelier-Temperatur gehalten werden, um das Beschichtungsmittel zu gelieren. Hiernach werden die ausgelierten Spulenkörper aus dem zweiten Arbeitsbereich entnommen und durch neue unbeschichtete Spulenkörper ersetzt.

Der zweite Arbeitsbereich kann also sowohl zum Vorerwärmen der Spulenkörper als auch zum Gelieren des Beschichtungsmittels am Spulenkörper als auch zum Aushärten des Beschichtungsmittels am Spulenkörper verwendet werden.

Der erste Arbeitsbereich und/oder der zweite Arbeitsbereich können manuell mit Spulenkörper be- und entladen werden. Die Imprägniervorrichtung lässt sich bezüglich ihres Automatisierungsgrads erhöhen, wenn die Imprägniervorrichtung mindestens eine automatische Be- und Entladeeinheit umfasst, durch die der erste Arbeitsbereich und/oder der zweite Arbeitsbereich mit mindestens einem Spulenkörper beladbar und/oder entladbar ist.

Darüber hinaus wird die Aufgabe gelöst durch ein Verfahren zum Träufelimprägnieren mit mindestens eines für elektrische Maschinen bestimmten Spulenkörpers, wie Wickelgut, insbesondere Spule für einen Stator oder Rotor in einer Imprägniervorrichtung mit mindestens einer der zuvor genannten Merkmale, mit mindestens einer Halteeinrichtung, die mindestens ein Haltemittel aufweist, das um eine zentrisch durch das Haltemittel verlaufende Rotationsachse drehend antreibbar oder angetrieben ist und an dem mindestens ein Spulenkörper relativ zum Haltemittel drehfest festlegbar oder festgelegt ist, mit mindestens einem ersten Arbeitsbereich, in dem mindestens eine Träufeleinrichtung angeordnet ist, durch die ein aushärtendes Beschichtungsmittel, wie Harz, insbesondere Kunstharz, oder Lack an den Spulenkörper abgebbar ist, mit mindestens einem zweiten Arbeitsbereich, in dem zumindest das auf den Spulenkörper abgegebene Beschichtungsmittel gelierbar, und mit mindestens einer Überführungseinrichtung, durch die das mindestens eine Haltemittel der Halteeinrichtung vom ersten Arbeitsbereich in den zweiten Arbeitsbereich und zurück überführbar ist, mit den Schritten:
a. Anordnen des mindestens einen Spulenkörpers manuell oder durch die Handlingeinheit an einem Haltemittel im zweiten Arbeitsbereich und drehendes Antreiben des Haltemittels um die Rotationsachse nach dem Anordnen des Spulenkörpers am Haltemittel;
b. Ggf. Vorerwärmen des Spulenkörpers durch das schirmartige oder ringartige Wärmeelement auf die Vorerwärm-Temperatur;
c. Überführen des mindestens einen Haltemittels vom zweiten Arbeitsbereich in den ersten Arbeitsbereich durch eine Dreh- oder Pendelbewegung um die Drehachse der Lagereinheit;
d. Abgeben von Beschichtungsmittel an den Spulenkörper im ersten Arbeitsbereich durch die Träufeleinrichtung und/oder Anordnen mindestens eines weiteren Spulenkörpers manuell oder durch die Handlingeinheit an einem weiteren Haltemittel im zweiten Arbeitsbereich und drehendes Antreiben des weiteren Haltemittels um die Rotationsachse nach dem Anordnen des Spulenkörpers und ggf. Vorerwärmen des weiteren Spulenkörpers durch das schirmartige oder ringartige Wärmeelement auf die Vorerwärm-Temperatur;
e. Überführen des mindestens einen Haltemittels mit dem beschichteten Spulenkörper vom erstem Arbeitsbereich in den zweiten Arbeitsbereich durch eine Dreh- oder Pendelbewegung um die Drehachse der Lagereinheit und gleichzeitiges Überführen des mindestens einen weiteren Haltemittels mit dem weiteren Spulenkörper vom zweiten Arbeitsbereich in den ersten Arbeitsbereich durch eine Dreh- oder Pendelbewegung um die Drehachse der Lagereinheit;
f. Gelieren des beschichteten Spulenkörpers im zweiten Arbeitsbereich durch das schirmartige oder ringartige Wärmeelement auf die Gelier-Temperatur und/oder Aushärte-Temperatur, Entnehmen des gelierten und/oder ausgehärtet beschichten Spulenkörpers manuell oder durch die Handlingeinheit, Anordnen mindestens eines nachfolgenden Spulenkörpers manuell oder durch die Handlingeinheit am Haltemittel im zweiten Arbeitsbereich und drehendes Antreiben des Haltemittels um die Rotationsachse nach dem Anordnen des Spulenkörpers sowie Abgeben von Beschichtungsmittel an den weiteren Spulenkörper im ersten Arbeitsbereich durch die Träufeleinrichtung.

Der Schritt b. kann gegebenenfalls durchgeführt werden. Das Vorerwärmen des Spulenkörpers kann beispielsweise dann nicht notwendig sein, wenn der Spulenkörper bereits die gewünschte Vorerwärm-Temperatur umfasst.

Ferner kann der beschichtete Spulenkörper im Schritt f. auch vor dem Entnehmen ausgehärtet werden.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Imprägniervorrichtung und des Verfahrens.

### In der Zeichnung zeigt:

- Figur 1: Eine Seitenansicht auf ein erstes Ausführungsbeispiel der Imprägniervorrichtung;
- Figur 2: Eine Draufsicht auf die Imprägniervorrichtung gemäß Figur 1;
- Figur 3: Ein schematisches Ablaufdiagramm eines Ausführungsbeispiels des erfindungsgemäßen Verfahrens.

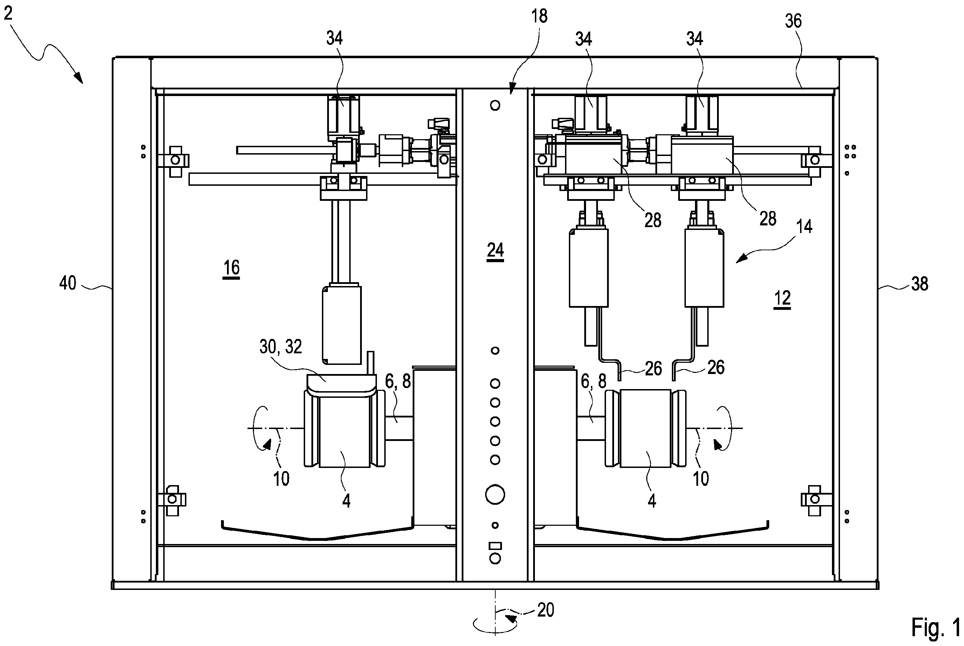

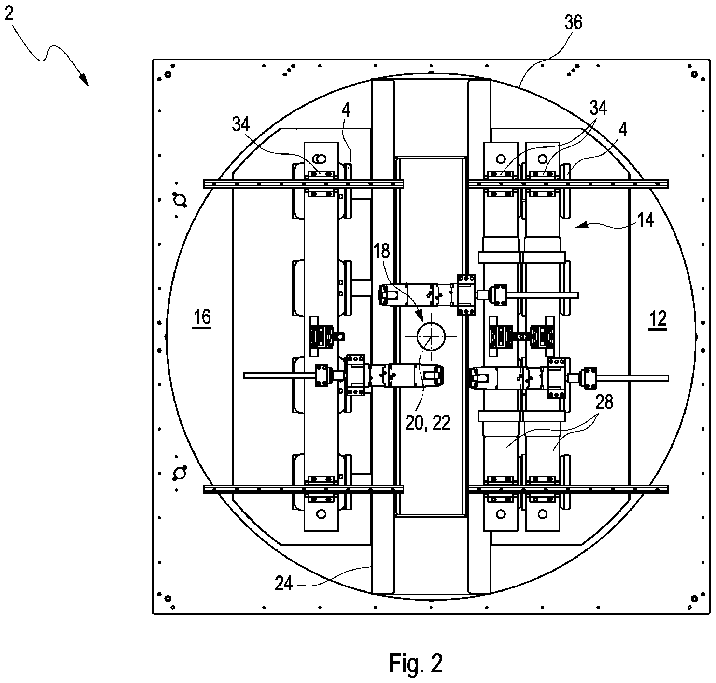

Die Figuren 1 und 2 zeigen ein Ausführungsbeispiel einer insgesamt mit dem Bezugszeichen 2 versehenen Imprägniervorrichtung zum Träufelimprägnieren mindestens eines für elektrische Maschinen bestimmten Spulenkörpers 4, wie Wickelgut, insbesondere Spule für einen Stator oder Rotor. Die Imprägniervorrichtung 2 umfasst eine Halteeinrichtung 6, die bei dem in den Figuren gezeigten Ausführungsbeispiel insgesamt acht Haltemittel 8 aufweist. Die Haltemittel 8 sind jeweils um eine zentrisch durch das Haltemittel 8 verlaufende Rotationsachse 10 drehend antreibbar. An den Haltemitteln 8 ist bei dem in den Figuren gezeigten Ausführungsbeispiel jeweils ein Spulenkörper 4 relativ zum Haltemittel 8 drehfest festgelegt.

Die Imprägniervorrichtung 2 umfasst einen ersten Arbeitsbereich 12, in dem mindestens eine Träufeleinrichtung 14 angeordnet ist. Durch die Träufeleinrichtung 14 ist aushärtendes Beschichtungsmittel, wie Harz, insbesondere Kunstharz, oder Lack an den Spulenkörper 4 abgebbar.

Darüber hinaus umfasst die Imprägniervorrichtung 2 einen zweiten Arbeitsbereich 16 in dem zumindest das auf dem Spulenkörper 4 abgegebene Beschichtungsmittel, gelierbar ist.

Die Imprägniervorrichtung 2 umfasst darüber hinaus eine Überführungseinrichtung 18, durch die das mindestens eine Haltemittel 8 der Halteeinrichtung 6 vom ersten Arbeitsbereich 12 in den zweiten Arbeitsbereich 16 und zurück, überführbar ist.

Bei dem in den Figuren gezeigten Ausführungsbeispiel umfasst die Überführungseinrichtung 18 eine eine Drehachse 20 umfassende Lagereinheit 22. Hierdurch umfasst das Überführen des mindestens einen Haltemittels 8 vom ersten Arbeitsbereich 12 in den zweiten Arbeitsbereich 16 eine Dreh- oder Pendelbewegung, um die Drehachse 20.

Diese Dreh- oder Pendelbewegung umfasst bei dem in den Figuren gezeigten Ausführungsbeispiel 180°, wobei die Drehachse 20 parallel zu einer Vertikalen verläuft.

Bei dem in den Figuren gezeigten Ausführungsbeispiel umfasst die Halteeinrichtung 6 eine flächenhafte Tragstruktur 24, an deren beiden Seiten jeweils Haltemittel 8 angeordnet sind. Die Haltemittel 8 sind punktsymmetrisch an der Tragstruktur 24 angeordnet. Hierdurch ist es ermöglicht, dass bei einer Drehung um die Drehachse 20 stets an derselben Position im ersten Arbeitsbereich 12, bzw. im zweiten Arbeitsbereich 16 das jeweilige Haltemittel 8 angeordnet ist.

Die Träufeleinrichtung 14 umfasst bei dem gezeigten Ausführungsbeispiel zwei Düsen 26, wobei jeder Düse 26 eine Verfahreinheit 28 zugeordnet ist. Durch die Verfahreinheit 28 ist die jeweilige Düse 26 parallel zu einer Horizontalen mittels Translation verfahrbar. Durch die Düsen 26 ist Beschichtungsmittel an den Spulenkörper 4 abgebbar.

Mit Blick in Figur 1 ist ersichtlich, dass durch eine erste Düse 26 Beschichtungsmittel an einen inneren Wickelkopf und über eine weitere Düse 26 an einen äußeren Wickelkopf abgebbar ist. Bei dem in den Figuren gezeigten Ausführungsbeispiel umfasst die Imprägniervorrichtung 2 im zweiten Arbeitsbereich 16 eine Wärmeeinheit 30, die ein Wärmeelement 32 umfasst, durch das mittels Induktion Wärmestrahlung, Wärmeleitung und/oder Konvektion der Spulenkörper 4 im zweiten Arbeitsbereich 16 erwärmbar ist. Hierdurch ist es ermöglicht, den Spulenkörper 4 im zweiten Arbeitsbereich 16 auf eine Vorerwärm-Temperatur und/oder auf eine Gelier-Temperatur zu erwärmen.

Das Wärmeelement 32 der Wärmeeinheit 30 ist schirmartig ausgebildet und umgibt den Spulenkörper 4 umfangsseitig bezüglich der Rotationsachse 10 zumindest abschnittsweise.

Die Imprägniervorrichtung 2 umfasst darüber hinaus eine Hubeinheit 34, durch die die Träufeleinrichtung 14 und/oder die Wärmeeinheit 30 parallel oder schräg zu einer Vertikalen durch Translation verfahrbar ist. Der erste Arbeitsbereich 12 und der zweite Arbeitsbereich 16 werden durch ein gemeinsames Schutzgehäuse 36 umgeben. Das Schutzgehäuse 36 ist über ein erstes Zugangsmittel 38, durch das der erste Arbeitsbereich 12 von außen zugänglich ist und einem zweiten Zugangsmittel 40, durch das der zweite Arbeitsbereich 16 von außen zugänglich ist, von außen erreichbar.

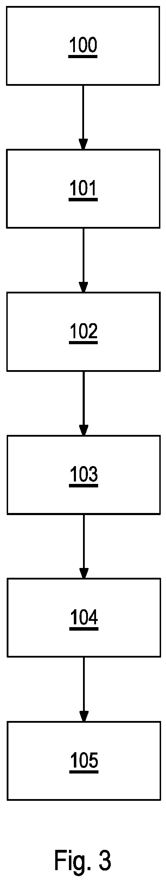

Figur 3 zeigt ein schematisches Ablaufdiagramm einer Ausführungsform des erfindungsgemäßen Verfahrens. Unter Verweis und Zuhilfenahme der Darstellung gemäß der Figuren 1 und 2 wird das Verfahren nachfolgend beschrieben:

In einem ersten Schritt 100 wird mindestens ein Spulenkörper 4 manuell oder durch eine Handlingeinheit an einem der Haltemittel 8 der Halteeinrichtung 6 im zweiten Arbeitsbereich 16 angeordnet. Hiernach wird das Haltemittel 8 um die Drehachse 20 rotierend angetrieben, wodurch sich auch der am Haltemittel 8 drehfest verbundene Spulenkörper 4 um die Rotationsachse 10 dreht.

In einem nachfolgenden Schritt 101 wird der Spulenkörper 4 gegebenenfalls durch das schirmartig Wärmeelement 32 auf die Vorerwärm-Temperatur vorerwärmt.

Der Schritt 101 kann gegebenenfalls durchgeführt werden. Er kann beispielsweise entfallen, wenn der Spulenkörper 4 bereits die Vorerwärm-Temperatur erfasst.

In einem anschließenden Schritt 102 wird das Haltemittel 8 durch eine Dreh- oder Pendelbewegung um die Drehachse 20 vom zweiten Arbeitsbereich 16 in den ersten Arbeitsbereich 12 überführt.

Anschließend wird in einem Schritt 103 Beschichtungsmittel an den Spulenkörper 4 abgegeben. Parallel hierzu kann im Schritt 103 im zweiten Arbeitsbereich 16 ein weiterer Spulenkörper 4 manuell oder durch eine Handlingeinheit an einem weiteren Haltemittel 8, das im zweiten Arbeitsbereich 16 angeordnet ist, festgelegt werden und durch das schirmartige Wärmeelement 32 auf die Vorerwärm-Temperatur vorerwärmt werden.

Wenn die Spulenkörper 4 im ersten Arbeitsbereich 12 fertig beschichtet sind, wird in einem Schritt 104 das mindestens eine Haltemittel 8 mit dem beschichteten Spulenkörper 4 vom ersten Arbeitsbereich 12 in den zweiten Arbeitsbereich 16 durch die Dreh- oder Pendelbewegung um die Drehachse 20 überführt. Gleichzeitig wird der vorerwärmte Spulenkörper 4 vom zweiten Arbeitsbereich 16 in den ersten Arbeitsbereich 12 überführt.

In einem abschließenden Schritt 105 wird der beschichtete Spulenkörper 4 im zweiten Arbeitsbereich 16 geliert, wobei durch das schirmartige Wärmeelement 32 der beschichtete Spulenkörper 4 auf der Gelier-Temperatur gehalten wird. Wenn der Spulenkörper 4 im Schritt 105 geliert ist, kann er manuell oder durch die Handlingeinheit entnommen werden. Anschließend kann an das nun frei gewordene Haltemittel 8 ein neuer unbeschichteter Spulenkörper 4 angeordnet werden und durch das Wärmeelement 32 auf Vorerwärm-Temperatur gebracht werden. Parallel zu den zuvor genannten Schritten im Schritt 105, wird im ersten Arbeitsbereich 12 mittlerweile der weitere Spulenkörper 4 durch die Träufeleinrichtung 14 mit Beschichtungsmittel beschichtet.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen im Rahmen des Schutzumfangs der nachfolgenden Ansprüche wesentlich sein.

### Bezugszeichenliste

- 2: Imprägniervorrichtung
- 4: Spulenkörper
- 6: Halteeinrichtung
- 8: Haltemittel
- 10: Rotationsachse
- 12: erster Arbeitsbereich
- 14: Träufeleinrichtung
- 16: zweiter Arbeitsbereich
- 18: Überführungseinrichtung
- 20: Drehachse
- 22: Lagereinheit
- 24: Tragstruktur
- 26: Düse
- 28: Verfahreinheit
- 30: Wärmeeinheit
- 32: Wärmeelement
- 34: Hubeinheit
- 36: Schutzgehäuse
- 38: erstes Zugangsmittel
- 40: zweites Zugangsmittel

## Patentansprüche

1. Imprägniervorrichtung (2) zum Träufelimprägnieren mindestens eines für elektrische Maschinen bestimmten Spulenkörpers (4), wie Wickelgut, insbesondere Spule für einen Stator oder Rotor, mit mindestens einer Halteeinrichtung (6), die mindestens ein Haltemittel (8) aufweist, das um eine zentrisch durch das Haltemittel (8) verlaufende Rotationsachse (10) drehend antreibbar oder angetrieben ist und an dem mindestens ein Spulenkörper (4) relativ zum Haltemittel (8) drehfest festlegbar oder festgelegt ist, mit mindestens einem ersten Arbeitsbereich (12), in dem mindestens eine Träufeleinrichtung (14) angeordnet ist, durch die ein aushärtendes Beschichtungsmittel, wie Harz, insbesondere Kunstharz, oder Lack an den Spulenkörper (4) abgebbar ist, mit mindestens einem zweiten Arbeitsbereich (16), in dem zumindest das auf den Spulenkörper (4) abgegebene Beschichtungsmittel gelierbar ist, und mit mindestens einer Überführungseinrichtung (18), durch die das mindestens eine Haltemittel (8) der Halteeinrichtung (6) vom ersten Arbeitsbereich (12) in den zweiten Arbeitsbereich (16) und zurück überführbar ist.

2. Imprägniervorrichtung (2) nach Anspruch 1, **dadurch gekennzeichnet, dass** die Überführungseinrichtung (18) mindestens eine eine Drehachse (20) umfassende Lagereinheit (22) umfasst, wobei das Überführen des mindestens einen Haltemittels (8) vom ersten Arbeitsbereich (12) in den zweiten Arbeitsbereich (16) eine Dreh- oder Pendelbewegung um die Drehachse (20) der Lagereinheit (22) umfasst und/oder dass das Haltemittel (8) mindestens einen Drehantrieb umfasst, durch den das das Haltemittel (8) um die zentrisch durch das Haltemittel (8) verlaufende Rotationsachse (10) drehend antreibbar oder angetrieben ist und durch den eine arbeitsschritt- und arbeitsbereich-abhängige Rotationsgeschwindigkeit vorgebbar ist.

3. Imprägniervorrichtung (2) nach Anspruch 2, **dadurch gekennzeichnet, dass** die Dreh- oder Pendelbewegung um die Drehachse (20) der Lagereinheit (22) um das Haltemittel (8) von dem ersten Arbeitsbereich (12) in den zweiten Arbeitsbereich (16) zu überführen mindestens 60°, insbesondere mindestens 90°, insbesondere mindestens 180°, umfasst und/oder dass die Drehachse (20) parallel oder schräg zu einer Vertikalen oder einer Horizontalen verläuft.

4. Imprägniervorrichtung (2) nach einem der vorhergehenden Ansprüche, **dadurch gekennzeichnet, dass** die Halteeinrichtung (6) eine flächenhafte Tragstruktur (24) umfasst, die die den ersten Arbeitsbereich (12) und den zweiten Arbeitsbereich (16) trennwandartig voneinander trennt und/oder dass die flächenhafte Tragstruktur (24) der Halteeinrichtung (6) an der die Drehachse (20) umfassenden Lagereinheit (22) drehbar festgelegt ist.

5. Imprägniervorrichtung (2) nach Anspruch 4, **dadurch gekennzeichnet, dass** mindestens eines des mindestens einen Haltemittels (8) an der flächenhaften Tragstruktur (24) um die Rotationsachse (10) drehbar festgelegt ist und dass das Überführen mindestens eines des mindestens einen Haltemittels (8) vom ersten Arbeitsbereich (12) in den zweiten Arbeitsbereich (16) eine Dreh- oder Pendelbewegung der Tragstruktur (24) um die Drehachse (20) der Lagereinheit (22) umfasst.

6. Imprägniervorrichtung (2) nach einem der Ansprüche 4 oder 5, **dadurch gekennzeichnet, dass** die Halteeinrichtung (6) mindestens zwei Haltemittel (8) umfasst, die auf einander gegenüberliegenden Seiten der Tragstruktur (24) angeordnet sind, insbesondere derart, dass mindestens ein Haltemittel (8) im ersten Arbeitsbereich (12) und mindestens ein Haltemittel (8) im zweiten Arbeitsbereich (16) angeordnet ist, insbesondere, dass die mindestens zwei Haltemittel (8) der Halteeinrichtung (6) bezüglich der Drehachse (20) punktsymmetrisch zueinander an der Tragstruktur (24) angeordnet sind.

7. Imprägniervorrichtung (2) nach einem der vorhergehenden Ansprüche, **dadurch gekennzeichnet, dass** die Träufeleinrichtung (14) mindestens eine Düse (26) umfasst, über die Beschichtungsmittel an den Spulenkörper (4) abgebbar, insbesondere träufelbar, ist, und/oder dass die Träufeleinrichtung (14) mindestens eine der mindestens einen Düse (26) zugeordnete Verfahreinheit (28) umfasst, durch die mindestens eine der mindestens einen Düse (26) parallel oder schräg zu einer Horizontalen durch Translation verfahrbar ist.

8. Imprägniervorrichtung (2) nach Anspruch 7, **dadurch gekennzeichnet, dass** jedem im ersten Arbeitsbereich (12) angeordneten Haltemittel (8) mindestens eine Düse (26) zugeordnet ist und/oder dass jedem im ersten Arbeitsbereich (12) angeordneten Haltemittel (8) mindestens zwei Düsen (26) zugeordnet sind, die an selben Spulenkörper (4) gleichzeitig und an einander gegenüberliegenden Enden oder mit mindestens zwei Düsen an einem Ende Beschichtungsmittel abgeben, insbesondere an einem der Tragstruktur (24) nächstgelegenen inneren Wickelkopf und einem dem inneren Wickelkopf gegenüberliegenden äußeren Wickelkopf.

9. Imprägniervorrichtung (2) nach einem der vorhergehenden Ansprüche, **dadurch gekennzeichnet, dass** an einem Haltemittel (8) der Halteeinrichtung (6) mindestens zwei Spulenkörper (4) angeordnet sind, wobei jedem Spulenkörper (4) mindestens eine Düse (26) der Träufeleinrichtung (14) zugeordnet ist oder wobei die mindestens eine Düse (26) den mindesten zwei Spulenkörpern (4) zugeordnet ist.

10. Imprägniervorrichtung (2) nach einem der vorhergehenden Ansprüche, **gekennzeichnet durch** mindestens eine Wärmeeinheit (30), die mindestens ein Wärmeelement (32) umfasst, durch das mittels Induktion, Wärmestrahlung, Wärmeleitung und/oder Konvektion, insbesondere durch Infrarot und Heißluft, der mindestens eine Spulenkörper (4) im ersten Arbeitsbereich (12) auf Träufel-Temperatur und/oder in dem zweiten Arbeitsbereich (16) auf eine Vorerwärm-Temperatur, Gelier-Temperatur und/oder Aushärte-Temperatur erwärmbar ist und/oder durch mindestens eine Stromwärmeeinheit, die mindestens ein in oder am Haltemittel (8) festgelegtes Kontaktmittel umfasst, das in der am Haltemittel (8) festgelegten Anordnung des Spulenkörpers (4) mit mindestens einem Phasenanschluss des Körpers manuell oder automatisch verbindbar oder verbunden ist, das beim Überführen des Haltemittels (8) vom ersten Arbeitsbereich (12) in den zweiten Arbeitsbereich (16) durchgehend und unterbrechungsfrei mit einer Stromzufuhr der Stromwärmeeinheit verbindbar oder verbunden ist und durch das der Körper im ersten Arbeitsbereich (12) auf Träufel-Temperatur und/oder in dem zweiten Arbeitsbereich (16) auf eine Vorerwärm-Temperatur, Gelier-Temperatur und/oder Aushärte-Temperatur durchgehend und unterbrechungsfrei elektrisch erwärmbar ist.

11. Imprägniervorrichtung (2) nach Anspruch 10, **dadurch gekennzeichnet, dass** die Wärmeeinheit (30) im zweiten Arbeitsbereich (16) mindestens ein schirmartiges oder ringartiges Wärmelement (32) umfasst, das am Spulenkörper (4) anordenbar ist und durch das der Spulenkörper (4) mittels Wärmezufuhr, insbesondere Induktion, auf die Vorerwärm-Temperatur und/oder Gelier-Temperatur erwärmbar ist.

12. Imprägniervorrichtung (2) nach einem der Ansprüche 7 bis 11, **gekennzeichnet durch** eine Hubeinheit (34), durch die die Träufeleinrichtung (14), insbesondere die mindestens eine Verfahreinheit (28) und/oder die Wärmeeinheit (30) gemeinsam oder unabhängig voneinander parallel oder schräg zu einer Vertikalen durch Translation verfahrbar sind, wobei die Träufeleinrichtung (14) von einer Träufelposition, in der die mindestens eine Düse (26) der Träufeleinrichtung (14) zum Spulenkörper (4) den geringsten Abstand umfasst, in eine Warteposition überführbar ist in der der Abstand der Düse (26) der Träufeleinrichtung (14) zum Spulenkörper (4) bezüglich der Träufelposition vergrößert ist und/oder wobei die Wärmeeinheit (30) von einer Wärmeposition, in der das mindestens eine Wärmeelement (32) zum Spulenkörper (4) den geringsten Abstand umfasst, in eine Beladeposition überführbar ist in der der Abstand des Wärmeelements (32) zum Spulenkörper (4) bezüglich der Wärmeposition vergrößert ist.

13. Imprägniervorrichtung (2) nach mindestens einem der vorhergehenden Ansprüche, **gekennzeichnet durch** mindestens ein Schutzgehäuse (36), in dem der erste Arbeitsbereich (12) und der zweite Arbeitsbereich (16) angeordnet sind und/oder **gekennzeichnet durch** zumindest ein erstes Zugangsmittel (38), wie Tür oder Klappe, im Schutzgehäuse (36) durch das der erste Arbeitsbereich (12) von außen zugänglich ist, und/oder durch zumindest ein zweites Zugangsmittel (40), wie Tür oder Klappe, im Schutzgehäuse (36) durch das der zweite Arbeitsbereich (16) von außen zugänglich ist.

14. Imprägniervorrichtung (2) nach mindestens einem der vorhergehenden Ansprüche, **gekennzeichnet durch** mindestens eine automatische Be- und Entladungseinheit, durch die der erste Arbeitsbereich (12) und/oder der zweite Arbeitsbereich (16) mit mindestens einem Spulenkörper (4) beladbar und/oder entladbar ist.

15. Verfahren zum Träufelimprägnieren mindestens eines für elektrische Maschinen bestimmten Spulenkörpers (4), wie Wickelgut, insbesondere Spule für einen Stator oder Rotor, in einer Imprägniervorrichtung (2) nach einem der Ansprüche 1 bis 14 mit mindestens einer Halteeinrichtung (6), die mindestens ein Haltemittel (8) aufweist, das um eine zentrisch durch das Haltemittel (8) verlaufende Rotationsachse (10) drehend antreibbar oder angetrieben ist und an dem mindestens ein Spulenkörper (4) relativ zum Haltemittel (8) drehfest festlegbar oder festgelegt ist, mit mindestens einem ersten Arbeitsbereich (12), in dem mindestens eine Träufeleinrichtung (14) angeordnet ist, durch die ein aushärtendes Beschichtungsmittel, wie Harz, insbesondere Kunstharz, oder Lack an den Spulenkörper (4) abgebbar ist, mit mindestens einem zweiten Arbeitsbereich (16), in dem zumindest das auf den Spulenkörper (4) abgegebene Beschichtungsmittel gelierbar, und mit mindestens einer Überführungseinrichtung (18), durch die das mindestens eine Haltemittel (8) der Halteeinrichtung (6) vom ersten Arbeitsbereich (12) in den zweiten Arbeitsbereich (16) und zurück überführbar ist, mit den Schritten:
a. Anordnen des mindestens einen Spulenkörpers (4) manuell oder durch die Handlingeinheit an einem Haltemittel (8) im zweiten Arbeitsbereich (16) und drehendes Antreiben des Haltemittels (8) um die Rotationsachse (10) nach dem Anordnen des Spulenkörpers (4) am Haltemittel (8);
b. Ggf. Vorerwärmen des Spulenkörpers (4) durch das schirmartige oder ringartige Wärmeelement (32) auf die Vorerwärm-Temperatur;
c. Überführen des mindestens einen Haltemittels (8) vom zweiten Arbeitsbereich (16) in den ersten Arbeitsbereich (12) durch eine Dreh- oder Pendelbewegung um die Drehachse (20) der Lagereinheit (22);
d. Abgeben von Beschichtungsmittel an den Spulenkörper (4) im ersten Arbeitsbereich (12) durch die Träufeleinrichtung (14) und/oder Anordnen mindestens eines weiteren Spulenkörpers (4) manuell oder durch die Handlingeinheit an einem weiteren Haltemittel (8) im zweiten Arbeitsbereich (16) und drehendes Antreiben des weiteren Haltemittels (8) um die Rotationsachse (10) nach dem Anordnen des Spulenkörpers (4) und ggf. Vorerwärmen des weiteren Spulenkörpers (4) durch das schirmartige oder ringartige Wärmeelement (32) auf die Vorerwärm-Temperatur;
e. Überführen des mindestens einen Haltemittels (8) mit dem beschichteten Spulenkörper (4) vom erstem Arbeitsbereich (12) in den zweiten Arbeitsbereich (16) durch eine Dreh- oder Pendelbewegung um die Drehachse (20) der Lagereinheit (22) und gleichzeitiges Überführen des mindestens einen weiteren Haltemittels (8) mit dem weiteren Spulenkörper (4) vom zweiten Arbeitsbereich (16) in den ersten Arbeitsbereich (12) durch eine Dreh- oder Pendelbewegung um die Drehachse (20) der Lagereinheit (22);
f. Gelieren des beschichteten Spulenkörpers (4) im zweiten Arbeitsbereich (16) durch das schirmartige oder ringartige Wärmeelement (32) auf die Gelier-Temperatur und/oder Aushärte-Temperatur, Entnehmen des gelierten und/oder ausgehärtet beschichten Spulenkörpers (4) manuell oder durch die Handlingeinheit, Anordnen mindestens eines nachfolgenden Spulenkörpers (4) manuell oder durch die Handlingeinheit am Haltemittel (8) im zweiten Arbeitsbereich (16) und drehendes Antreiben des Haltemittels (8) um die Rotationsachse (10) nach dem Anordnen des Spulenkörpers (4) sowie Abgeben von Beschichtungsmittel an den weiteren Spulenkörper (4) im ersten Arbeitsbereich (12) durch die Träufeleinrichtung (14) .

## Geänderte Patentansprüche

### Geänderte Patentansprüche gemäss Regel 137(2) EPÜ.

1. Imprägniervorrichtung (2) zum Träufelimprägnieren mindestens eines für elektrische Maschinen bestimmten Spulenkörpers (4), wie Wickelgut, insbesondere Spule für einen Stator oder Rotor, mit mindestens einer Halteeinrichtung (6), die mindestens ein Haltemittel (8) aufweist, das um eine zentrisch durch das Haltemittel (8) verlaufende Rotationsachse (10) drehend antreibbar oder angetrieben ist und an dem mindestens ein Spulenkörper (4) relativ zum Haltemittel (8) drehfest festlegbar oder festgelegt ist, mit mindestens einem ersten Arbeitsbereich (12), in dem mindestens eine Träufeleinrichtung (14) angeordnet ist, durch die ein aushärtendes Beschichtungsmittel, wie Harz, insbesondere Kunstharz, oder Lack an den Spulenkörper (4) abgebbar ist, mit mindestens einem zweiten Arbeitsbereich (16), in dem zumindest das auf den Spulenkörper (4) abgegebene Beschichtungsmittel gelierbar ist, und mit mindestens einer Überführungseinrichtung (18), durch die das mindestens eine Haltemittel (8) der Halteeinrichtung (6) vom ersten Arbeitsbereich (12) in den zweiten Arbeitsbereich (16) und zurück überführbar ist, **dadurch gekennzeichnet, dass** die Träufeleinrichtung (14) mindestens eine Düse (26) umfasst, über die Beschichtungsmittel an den Spulenkörper (4) abgebbar ist, und dass die Träufeleinrichtung (14) mindestens eine der mindestens einen Düse (26) zugeordnete Verfahreinheit (28) umfasst, durch die mindestens eine der mindestens einen Düse (26) parallel oder schräg zu einer Horizontalen durch Translation verfahrbar ist.

2. Imprägniervorrichtung (2) nach Anspruch 1, **dadurch gekennzeichnet, dass** die Überführungseinrichtung (18) mindestens eine eine Drehachse (20) umfassende Lagereinheit (22) umfasst, wobei das Überführen des mindestens einen Haltemittels (8) vom ersten Arbeitsbereich (12) in den zweiten Arbeitsbereich (16) eine Dreh- oder Pendelbewegung um die Drehachse (20) der Lagereinheit (22) umfasst und/oder dass das Haltemittel (8) mindestens einen Drehantrieb umfasst, durch den das das Haltemittel (8) um die zentrisch durch das Haltemittel (8) verlaufende Rotationsachse (10) drehend antreibbar oder angetrieben ist und durch den eine arbeitsschritt- und arbeitsbereich-abhängige Rotationsgeschwindigkeit vorgebbar ist.

3. Imprägniervorrichtung (2) nach Anspruch 2, **dadurch gekennzeichnet, dass** die Dreh- oder Pendelbewegung um die Drehachse (20) der Lagereinheit (22) um das Haltemittel (8) von dem ersten Arbeitsbereich (12) in den zweiten Arbeitsbereich (16) zu überführen mindestens 60°, insbesondere mindestens 90°, insbesondere mindestens 180°, umfasst und/oder dass die Drehachse (20) parallel oder schräg zu einer Vertikalen verläuft.

4. Imprägniervorrichtung (2) nach einem der vorhergehenden Ansprüche, **dadurch gekennzeichnet, dass** die Halteeinrichtung (6) eine flächenhafte Tragstruktur (24) umfasst, die die den ersten Arbeitsbereich (12) und den zweiten Arbeitsbereich (16) trennwandartig voneinander trennt und insbesondere dass die flächenhafte Tragstruktur (24) der Halteeinrichtung (6) an der die Drehachse (20) umfassenden Lagereinheit (22) drehbar festgelegt ist.

5. Imprägniervorrichtung (2) nach Anspruch 4, **dadurch gekennzeichnet, dass** mindestens eines des mindestens einen Haltemittels (8) an der flächenhaften Tragstruktur (24) um die Rotationsachse (10) drehbar festgelegt ist und dass das Überführen mindestens eines des mindestens einen Haltemittels (8) vom ersten Arbeitsbereich (12) in den zweiten Arbeitsbereich (16) eine Dreh- oder Pendelbewegung der Tragstruktur (24) um die Drehachse (20) der Lagereinheit (22) umfasst.

6. Imprägniervorrichtung (2) nach einem der Ansprüche 4 oder 5, **dadurch gekennzeichnet, dass** die Halteeinrichtung (6) mindestens zwei Haltemittel (8) umfasst, die auf einander gegenüberliegenden Seiten der Tragstruktur (24) angeordnet sind, insbesondere derart, dass mindestens ein Haltemittel (8) im ersten Arbeitsbereich (12) und mindestens ein Haltemittel (8) im zweiten Arbeitsbereich (16) angeordnet ist, insbesondere, dass die mindestens zwei Haltemittel (8) der Halteeinrichtung (6) bezüglich der Drehachse (20) punktsymmetrisch zueinander an der Tragstruktur (24) angeordnet sind.

7. Imprägniervorrichtung (2) nach einem der vorhergehenden Ansprüche, **dadurch gekennzeichnet, dass** jedem im ersten Arbeitsbereich (12) angeordneten Haltemittel (8) mindestens eine Düse (26) zugeordnet ist und/oder dass jedem im ersten Arbeitsbereich (12) angeordneten Haltemittel (8) mindestens zwei Düsen (26) zugeordnet sind, die an selben Spulenkörper (4) gleichzeitig und an einander gegenüberliegenden Enden oder mit mindestens zwei Düsen an einem Ende Beschichtungsmittel abgeben, insbesondere an einem der Tragstruktur (24) nächstgelegenen inneren Wickelkopf und einem dem inneren Wickelkopf gegenüberliegenden äußeren Wickelkopf.

8. Imprägniervorrichtung (2) nach einem der vorhergehenden Ansprüche, **dadurch gekennzeichnet, dass** an einem Haltemittel (8) der Halteeinrichtung (6) mindestens zwei Spulenkörper (4) angeordnet sind, wobei jedem Spulenkörper (4) mindestens eine Düse (26) der Träufeleinrichtung (14) zugeordnet ist oder wobei die mindestens eine Düse (26) den mindesten zwei Spulenkörpern (4) zugeordnet ist.

9. Imprägniervorrichtung (2) nach einem der vorhergehenden Ansprüche, **gekennzeichnet durch** mindestens eine Wärmeeinheit (30), die mindestens ein Wärmeelement (32) umfasst, durch das mittels Induktion, Wärmestrahlung, Wärmeleitung und/oder Konvektion, insbesondere durch Infrarot und Heißluft, der mindestens eine Spulenkörper (4) im ersten Arbeitsbereich (12) auf Träufel-Temperatur und/oder in dem zweiten Arbeitsbereich (16) auf eine Vorerwärm-Temperatur, Gelier-Temperatur und/oder Aushärte-Temperatur erwärmbar ist und/oder durch mindestens eine Stromwärmeeinheit, die mindestens ein in oder am Haltemittel (8) festgelegtes Kontaktmittel umfasst, das in der am Haltemittel (8) festgelegten Anordnung des Spulenkörpers (4) mit mindestens einem Phasenanschluss des Körpers manuell oder automatisch verbindbar oder verbunden ist, das beim Überführen des Haltemittels (8) vom ersten Arbeitsbereich (12) in den zweiten Arbeitsbereich (16) durchgehend und unterbrechungsfrei mit einer Stromzufuhr der Stromwärmeeinheit verbindbar oder verbunden ist und durch das der Körper im ersten Arbeitsbereich (12) auf Träufel-Temperatur und/oder in dem zweiten Arbeitsbereich (16) auf eine Vorerwärm-Temperatur, Gelier-Temperatur und/oder Aushärte-Temperatur durchgehend und unterbrechungsfrei elektrisch erwärmbar ist.

10. Imprägniervorrichtung (2) nach Anspruch 9, **dadurch gekennzeichnet, dass** die Wärmeeinheit (30) im zweiten Arbeitsbereich (16) mindestens ein schirmartiges oder ringartiges Wärmelement (32) umfasst, das am Spulenkörper (4) anordenbar ist und durch das der Spulenkörper (4) mittels Wärmezufuhr, insbesondere Induktion, auf die Vorerwärm-Temperatur und/oder Gelier-Temperatur erwärmbar ist.

11. Imprägniervorrichtung (2) nach einem der vorhergehenden Ansprüche, **gekennzeichnet durch** eine Hubeinheit (34), durch die die Träufeleinrichtung (14), insbesondere die mindestens eine Verfahreinheit (28) und/oder die Wärmeeinheit (30) gemeinsam oder unabhängig voneinander parallel oder schräg zu einer Vertikalen durch Translation verfahrbar sind, wobei die Träufeleinrichtung (14) von einer Träufelposition, in der die mindestens eine Düse (26) der Träufeleinrichtung (14) zum Spulenkörper (4) den geringsten Abstand umfasst, in eine Warteposition überführbar ist in der der Abstand der Düse (26) der Träufeleinrichtung (14) zum Spulenkörper (4) bezüglich der Träufelposition vergrößert ist und/oder wobei die Wärmeeinheit (30) von einer Wärmeposition, in der das mindestens eine Wärmeelement (32) zum Spulenkörper (4) den geringsten Abstand umfasst, in eine Beladeposition überführbar ist in der der Abstand des Wärmeelements (32) zum Spulenkörper (4) bezüglich der Wärmeposition vergrößert ist.

12. Imprägniervorrichtung (2) nach mindestens einem der vorhergehenden Ansprüche, **gekennzeichnet durch** mindestens ein Schutzgehäuse (36), in dem der erste Arbeitsbereich (12) und der zweite Arbeitsbereich (16) angeordnet sind.

13. Imprägniervorrichtung (2) nach Anspruch 12, **gekennzeichnet durch** zumindest ein erstes Zugangsmittel (38), wie Tür oder Klappe, im Schutzgehäuse (36) durch das der erste Arbeitsbereich (12) von außen zugänglich ist, und/oder durch zumindest ein zweites Zugangsmittel (40), wie Tür oder Klappe, im Schutzgehäuse (36) durch das der zweite Arbeitsbereich (16) von außen zugänglich ist.

14. Imprägniervorrichtung (2) nach mindestens einem der vorhergehenden Ansprüche, **gekennzeichnet durch** mindestens eine automatische Be- und Entladungseinheit, durch die der erste Arbeitsbereich (12) und/oder der zweite Arbeitsbereich (16) mit mindestens einem Spulenkörper (4) beladbar und/oder entladbar ist.

15. Verfahren zum Träufelimprägnieren mindestens eines für elektrische Maschinen bestimmten Spulenkörpers (4), wie Wickelgut, insbesondere Spule für einen Stator oder Rotor, in einer Imprägniervorrichtung (2) nach einem der Ansprüche 1 bis 14 mit mindestens einer Halteeinrichtung (6), die mindestens ein Haltemittel (8) aufweist, das um eine zentrisch durch das Haltemittel (8) verlaufende Rotationsachse (10) drehend antreibbar oder angetrieben ist und an dem mindestens ein Spulenkörper (4) relativ zum Haltemittel (8) drehfest festlegbar oder festgelegt ist, mit mindestens einem ersten Arbeitsbereich (12), in dem mindestens eine Träufeleinrichtung (14) angeordnet ist, durch die ein aushärtendes Beschichtungsmittel, wie Harz, insbesondere Kunstharz, oder Lack an den Spulenkörper (4) abgebbar ist, mit mindestens einem zweiten Arbeitsbereich (16), in dem zumindest das auf den Spulenkörper (4) abgegebene Beschichtungsmittel gelierbar, und mit mindestens einer Überführungseinrichtung (18), durch die das mindestens eine Haltemittel (8) der Halteeinrichtung (6) vom ersten Arbeitsbereich (12) in den zweiten Arbeitsbereich (16) und zurück überführbar ist, mit den Schritten:
a. Anordnen des mindestens einen Spulenkörpers (4) manuell oder durch die Handlingeinheit an einem Haltemittel (8) im zweiten Arbeitsbereich (16) und drehendes Antreiben des Haltemittels (8) um die Rotationsachse (10) nach dem Anordnen des Spulenkörpers (4) am Haltemittel (8);
b. Ggf. Vorerwärmen des Spulenkörpers (4) durch das schirmartige oder ringartige Wärmeelement (32) auf die Vorerwärm-Temperatur;
c. Überführen des mindestens einen Haltemittels (8) vom zweiten Arbeitsbereich (16) in den ersten Arbeitsbereich (12) durch eine Dreh- oder Pendelbewegung um die Drehachse (20) der Lagereinheit (22);
d. Abgeben von Beschichtungsmittel an den Spulenkörper (4) im ersten Arbeitsbereich (12) durch die Träufeleinrichtung (14) und/oder Anordnen mindestens eines weiteren Spulenkörpers (4) manuell oder durch die Handlingeinheit an einem weiteren Haltemittel (8) im zweiten Arbeitsbereich (16) und drehendes Antreiben des weiteren Haltemittels (8) um die Rotationsachse (10) nach dem Anordnen des Spulenkörpers (4) und ggf. Vorerwärmen des weiteren Spulenkörpers (4) durch das schirmartige oder ringartige Wärmeelement (32) auf die Vorerwärm-Temperatur;
e. Überführen des mindestens einen Haltemittels (8) mit dem beschichteten Spulenkörper (4) vom erstem Arbeitsbereich (12) in den zweiten Arbeitsbereich (16) durch eine Dreh- oder Pendelbewegung um die Drehachse (20) der Lagereinheit (22) und gleichzeitiges Überführen des mindestens einen weiteren Haltemittels (8) mit dem weiteren Spulenkörper (4) vom zweiten Arbeitsbereich (16) in den ersten Arbeitsbereich (12) durch eine Dreh- oder Pendelbewegung um die Drehachse (20) der Lagereinheit (22);
f. Gelieren des beschichteten Spulenkörpers (4) im zweiten Arbeitsbereich (16) durch das schirmartige oder ringartige Wärmeelement (32) auf die Gelier-Temperatur und/oder Aushärte-Temperatur, Entnehmen des gelierten und/oder ausgehärtet beschichten Spulenkörpers (4) manuell oder durch die Handlingeinheit, Anordnen mindestens eines nachfolgenden Spulenkörpers (4) manuell oder durch die Handlingeinheit am Haltemittel (8) im zweiten Arbeitsbereich (16) und drehendes Antreiben des Haltemittels (8) um die Rotationsachse (10) nach dem Anordnen des Spulenkörpers (4) sowie Abgeben von Beschichtungsmittel an den weiteren Spulenkörper (4) im ersten Arbeitsbereich (12) durch die Träufeleinrichtung (14) .
